# EUROPEAN PATENT APPLICATION

(11) **EP 4 502 884 A1**
(43) Date of publication of application: **05.02.2025**
(21) Application number: 23799514.7
(22) Date of filing: 02.05.2023
(51) Int. Cl.: G06N 20/00

(54) **TRAINING DEVICE, TRAINING METHOD, AND TRAINING PROGRAM**

(30) Priority: 02.05.2022 JP 2022076198
(71) Applicant: Mitsubishi Heavy Industries, Ltd., Tokyo 100-8332 (JP)
(72) Inventor: KATAOKA, Yujiro, Tokyo 100-8332 (JP); ITO, Masayuki, Tokyo 100-8332 (JP); MATSUNAMI, Natsuki, Tokyo 100-8332 (JP)
(74) Representative: Hoffmann Eitle
(86) International application number: PCT/JP2023/017150
(87) International publication number: WO 2023/214585

(57) **Abstract**

There is provided a learning device that performs learning of a learning model of an agent, the learning device including: a reinforcement learning unit that performs learning of the learning model such that a reward assigned to the agent under a predetermined environment is maximized; an evaluation index value calculation unit that calculates a first index value and a second index value of the learning model; and a model extraction unit that extracts, as a trained model, the learning model in which the number of learning steps is equal to or larger than a predetermined number. The model extraction unit selects, as the trained model to be evaluated, the trained model in which each of the first index value and the second index value satisfies a predetermined condition, from the trained models.

## Description

### Technical Field

The present disclosure relates to a learning device, a learning method, and a learning program.

### Background Art

In machine learning, a technique for extracting a machine learning model with high prediction accuracy from a plurality of machine learning models is known. For example, PTL 1 describes a technique for automatically extracting a learning model with higher accuracy from a plurality of learning models at high speed while reducing a load on resources of a computer.

### Citation List

Patent Literature

[PTL 1] Japanese Patent No. 6801149

### Summary of Invention

### Technical Problem

In reinforcement learning, in a problem that rewards are sparse or a problem that a high-dimensional state is included, learning is not stably performed. As a result, it is not guaranteed that a model will converge to a good performance as the learning process progresses. In a case of the problem that rewards are sparse, in order to promote learning, it is necessary to design dense rewards based on an empirical rule of a designer. Further, depending on the rewards, learning may be excessively performed to acquire more rewards as compared with rewards obtained in a case where an original goal is achieved. In this case, the learning model may converge to a model having a high acquisition reward but a low performance. On the other hand, even in a case where the learning model does not converge or converges to an unintended model, a model of which the performance is temporarily good may be obtained in the process of learning. In a case of evaluating a model being trained in detail, it is necessary to temporarily stop the learning processing during learning and to confirm the generalization performance using test data. As a result, there is a problem in that a large amount of calculation time is required and a large amount of computer resources are occupied.

Therefore, an object of the present disclosure is to provide a learning device, a learning method, and a learning program capable of appropriately selecting a learning model having a good performance from among learning models being trained. Solution to Problem

According to the present disclosure, there is provided a learning device that performs learning of a learning model of an agent, the learning device including: a reinforcement learning unit that performs learning of the learning model such that a reward assigned to the agent under a predetermined environment is maximized; an evaluation index value calculation unit that calculates a first index value and a second index value of the learning model; and a model extraction unit that extracts, as a trained model, the learning model in which the number of learning steps is equal to or larger than a predetermined number, in which the model extraction unit selects, as the trained model to be evaluated, the trained model in which each of the first index value and the second index value satisfies a predetermined condition, from the trained models.

According to the present disclosure, there is provided a learning method of performing learning of a learning model of an agent by using a learning device, the learning method including: a step of performing learning of the learning model such that a reward assigned to the agent under a predetermined environment is maximized; a step of calculating a first index value and a second index value of the learning model; a step of extracting, as a trained model, the learning model in which the number of learning steps is equal to or larger than a predetermined number; and a step of selecting, as the trained model to be evaluated, the trained model in which each of the first index value and the second index value satisfies a predetermined condition, from the trained models.

According to the present disclosure, there is provided a learning program for performing learning of a learning model of an agent by using a learning device, the learning program causing the learning device to execute: a step of performing learning of the learning model such that a reward assigned to the agent under a predetermined environment is maximized; a step of calculating a first index value and a second index value of the learning model; a step of extracting, as a trained model, the learning model in which the number of learning steps is equal to or larger than a predetermined number; and a step of selecting, as the trained model to be evaluated, the trained model in which each of the first index value and the second index value satisfies a predetermined condition, from the trained models.

### Advantageous Effects of Invention

According to the present disclosure, it is possible to appropriately select a learning model having a good performance from among learning models being trained. Brief Description of Drawings

Fig. 1 is a diagram for explaining learning using a learning model according to the present embodiment.
Fig. 2 is a block diagram illustrating a configuration example of a learning device according to the embodiment.
Fig. 3 is a diagram for explaining a comparative example.
Fig. 4 is a flowchart illustrating an example of trained model extraction processing according to the embodiment.
Fig. 5 is a diagram for explaining a method of selecting a trained model according to the embodiment.

### Description of Embodiments

Hereinafter, an embodiment according to the present invention will be described in detail based on the drawings. Note that the present invention is not limited to the embodiment. In addition, components in the embodiment described below include those that can be easily replaced by those skilled in the art, or those that are substantially the same. Further, the components described below can be combined as appropriate, and in a case where a plurality of embodiments are present, the embodiments can be combined.

### [Embodiment]

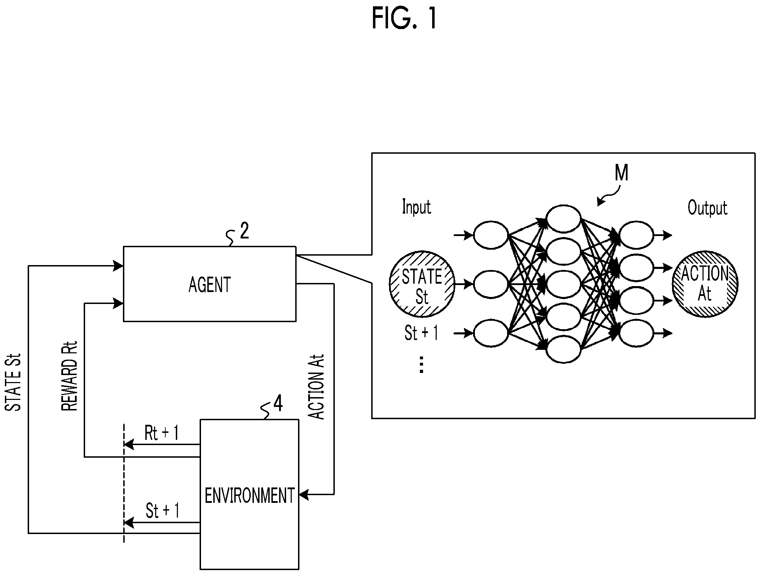

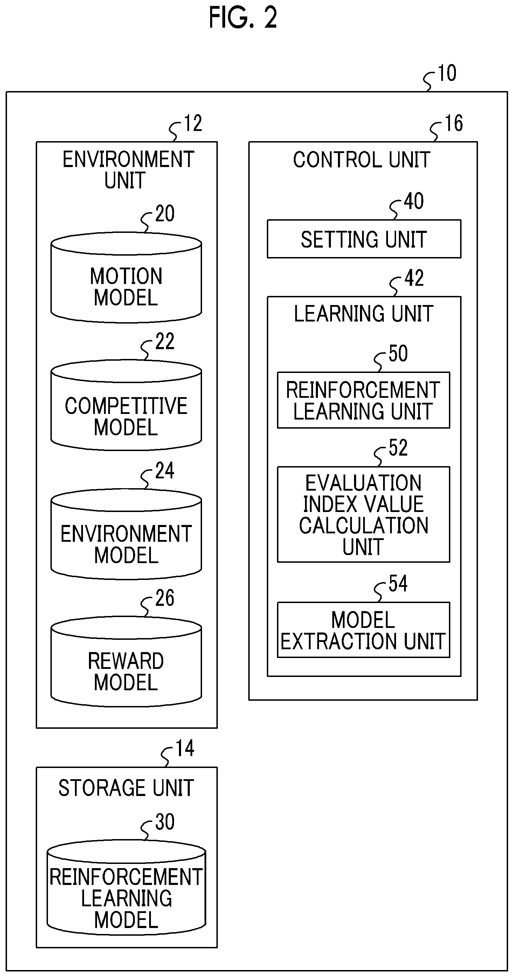

A learning device 10 and a learning method according to the present embodiment are a device and a method of performing learning of a learning model including a hyperparameter. Fig. 1 is a diagram for explaining learning using a learning model according to the present embodiment. Fig. 2 is a block diagram illustrating a configuration example of a learning device according to the embodiment.

### (Learning using Learning Model)

First, learning using a learning model M will be described with reference to Fig. 1. The learning model M is mounted on an agent 2 that executes an action At. As the target agent 2, for example, a machine capable of executing an operation for a robot, a vehicle, a vessel, an aircraft, or the like is applied. The agent 2 executes a predetermined action At under a predetermined environment 4 by using the learning model M.

As illustrated in Fig. 1, the learning model M is a neural network including a plurality of nodes. The neural network is a network in which a plurality of nodes are connected, and has a plurality of layers. The plurality of nodes are provided in each of the layers. Parameters of the neural network include weights and biases between the nodes. In addition, as the parameters of the neural network, there are hyperparameters such as the number of layers, the number of nodes, and a learning rate. In the present embodiment, learning of the weights and the biases between the nodes of the learning model M is performed.

Next, the learning using the learning model M will be described. As the learning, there are imitation learning and reinforcement learning. The imitation learning is supervised learning. The agent 2 performs learning of the hyperparameters of the learning model M such that a predetermined action At is executed in a case where a predetermined state St is input under a predetermined environment 4. The reinforcement learning is an unsupervised learning. The agent 2 performs learning of the weights and the biases between the nodes in the learning model M such that a reward Rt assigned under a predetermined environment 4 is maximized.

In reinforcement learning, the agent 2 acquires a state St from the environment 4, and also acquires a reward Rt from the environment 4. In addition, the agent 2 selects an action At from the learning model M based on the acquired state St and the acquired reward Rt. In a case where the action At selected by the agent 2 is executed, the state St of the agent 2 in the environment 4 transitions to a state St+1. In addition, a reward Rt+1 based on the executed action At, the state St before the transition, and the state St+1 after the transition is assigned to the agent 2. Further, in the reinforcement learning, the above learning is repeated by the predetermined number of learning steps for evaluation such that the reward Rt assigned to the agent 2 is maximized.

The learning device 10 executes reinforcement learning of an action of the agent in reinforcement learning of a competitive environment, regardless of a symmetric environment and an asymmetric environment. The learning device 10 extracts, in a problem in which reinforcement learning is attempted, a model being trained that is expected to have a good performance, by using an evaluation index (a cumulative reward, a cumulative winning rate, or the like) obtained during learning, and evaluates only the model, which is extracted during learning, after learning.

### (Comparative Example)

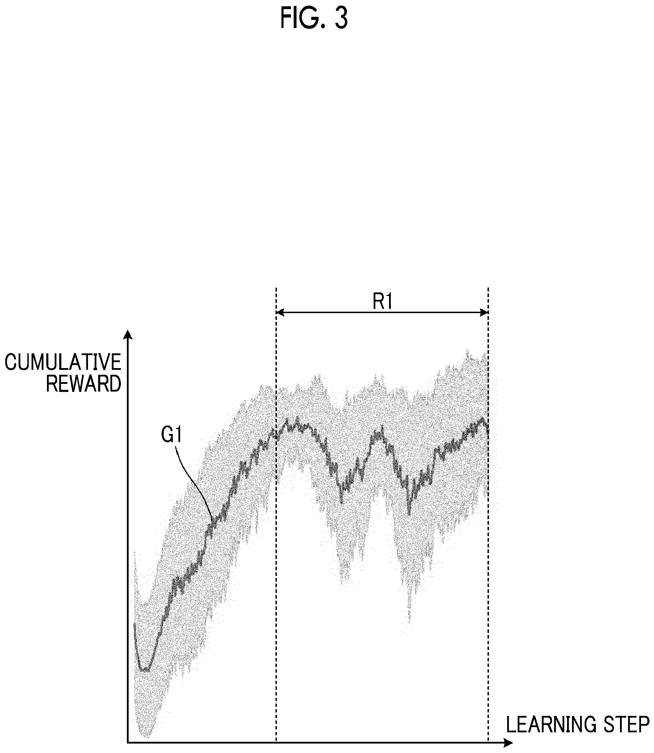

Before explaining the present embodiment, a comparative example of the present embodiment will be described. Fig. 3 is a diagram for explaining a comparative example.

Fig. 3 is a graph showing an example of an execution result of reinforcement learning. In Fig. 3, a horizontal axis indicates the number of learning steps, and a vertical axis indicates a cumulative reward.

In the technique according to the comparative example, for example, based on the graph G1 as illustrated in Fig. 3, a step in which a trained model having a highest performance is obtained is estimated, and a trained model is extracted at a certain step interval. In addition, in the technique according to the comparative example, the extracted trained model is caused to compete against an opponent that is an evaluation reference a plurality of times, and the performance of the trained model is evaluated, for example, by a winning rate with respect to the opponent.

In the technique according to the comparative example, there is a possibility that the trained model may converge to a "model having a high acquisition reward but a low performance". For this reason, in the evaluation according to the comparative example, as shown in Fig. 3, for example, it is necessary to temporarily stop learning processing during learning in a section in which the cumulative reward in a range R1 is relatively high and to confirm the generalization performance by using test data. As a result, the technique according to the comparative example requires a large amount of calculation time and occupies many computer resources. In addition, in the technique according to the comparative example, even in a case where a model of which the performance is temporarily good is obtained in the process of learning, the model is discarded without being evaluated.

### (Learning Device)

The description returns to Fig. 2. As illustrated in Fig. 2, the learning device 10 includes an environment unit 12, a storage unit 14, and a control unit 16.

The environment unit 12 provides an environment for executing reinforcement learning of the trained model. The environment unit 12 includes a motion model 20, a competitive model 22, an environment model 24, and a reward model 26. The environment unit 12 provides an environment for executing reinforcement learning, based on the motion model 20, the competitive model 22, the environment model 24, and the reward model 26. Specifically, the environment unit 12 assigns a reward to the trained model or derives a state of the trained model that transitions by an action.

The storage unit 14 is a memory that stores various types of information. The storage unit 14 stores, for example, information such as calculation content of the control unit 16 and a program. The storage unit 14 includes, for example, at least one of main storage devices such as a random access memory (RAM) and a read only memory (ROM), an external storage device such as a hard disk drive (HDD), or the like. The storage unit 14 stores a reinforcement learning model 30.

The reinforcement learning model 30 includes a plurality of trained models in reinforcement learning. The reinforcement learning model 30 stores, for example, a plurality of trained models that are trained for each learning step.

The control unit 16 controls operations of each unit of the learning device 10. The control unit 16 is realized, for example, by causing a central processing unit (CPU), a micro processing unit (MPU), or the like to execute the program stored in the storage unit 14 or the like, using the RAM or the like as a work area. The control unit 16 may be realized by, for example, an integrated circuit such as an application specific integrated circuit (ASIC) or a field programmable gate array (FPGA). The control unit 16 may be realized by a combination of hardware and software.

The control unit 16 includes a setting unit 40 and a learning unit 42.

The setting unit 40 sets various conditions for executing machine learning. The setting unit 40 sets, for example, an action determination model (a state and an action), a reward function, a deep reinforcement learning algorithm, a model size, a hyperparameter, or the like.

The learning unit 42 executes learning of the learning model. The learning unit 42 includes a reinforcement learning unit 50, an evaluation index value calculation unit 52, and a model extraction unit 54.

The reinforcement learning unit 50 executes learning based on the reward assigned from the environment unit 12. Details of the reinforcement learning unit 50 will be described later.

The evaluation index value calculation unit 52 calculates an evaluation index value for evaluating a performance of the trained model. Specifically, the evaluation index value calculation unit 52 calculates two evaluation index values, which are a first evaluation index value for evaluating the performance of the trained model and a second evaluation index value different from the first evaluation index value. The evaluation index value calculation unit 52 may calculate three or more evaluation index values. Details of the evaluation index value calculation unit 52 will be described later.

The model extraction unit 54 extracts a trained model satisfying a predetermined condition, from the plurality of trained models. The model extraction unit 54 extracts a trained model, for example, based on the evaluation index value calculated by the evaluation index value calculation unit 52. Details of the model extraction unit 54 will be described later.

### (Trained Model Extraction Processing)

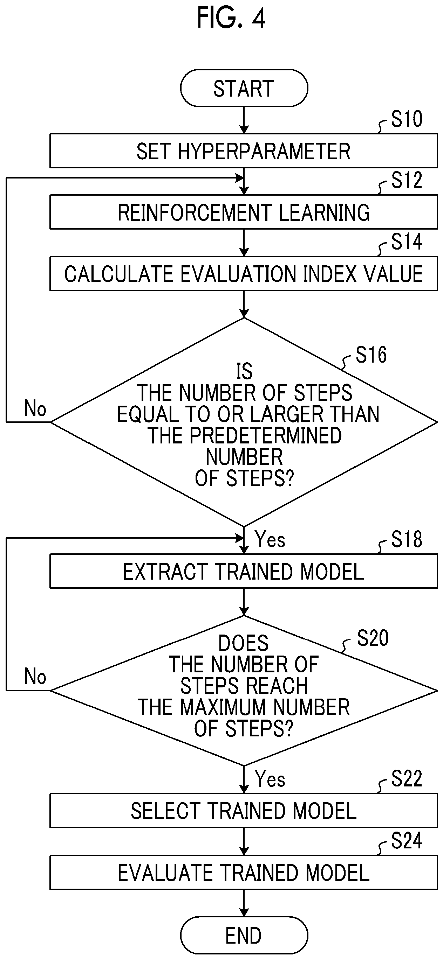

The trained model extraction processing according to the embodiment will be described with reference to Fig. 4. Fig. 4 is a flowchart illustrating an example of trained model extraction processing according to the embodiment.

The setting unit 40 sets a hyperparameter for executing reinforcement learning (step S10). Then, the process proceeds to step S12. In the present embodiment, it is assumed that the hyperparameter to be set has an appropriate value which is determined in advance.

The reinforcement learning unit 50 executes reinforcement learning (step S12). Specifically, the reinforcement learning unit 50 executes learning, for example, such that the reward assigned to the trained model is maximized. Then, the process proceeds to step S14.

The evaluation index value calculation unit 52 calculates an evaluation index value (step S14). Specifically, the evaluation index value calculation unit 52 calculates a value of a cumulative reward and a value of a cumulative winning rate as the evaluation index value. Then, the process proceeds to step S16.

The reinforcement learning unit 50 determines whether or not the number of steps in which reinforcement learning is executed is equal to or larger than the predetermined number of steps (step S16). The predetermined number of steps may be arbitrarily set according to a problem to be handled or the like. In a case where it is determined that the number of steps is equal to or larger than the predetermined number of steps (Yes in step S16), the process proceeds to step S18. In a case where it is determined that the number of steps is not equal to or larger than the predetermined number of steps (No in step S16), the process proceeds to step S12. That is, in the present embodiment, until the number of steps reaches the predetermined number of steps, the reinforcement learning and the evaluation index value calculation processing are repeated.

In a case where a determination result in step S16 is Yes, the model extraction unit 54 extracts a trained model (step S18). Specifically, the model extraction unit 54 extracts all the trained models on which reinforcement learning is executed by the predetermined number of steps or more. Then, the process proceeds to step S20.

The reinforcement learning unit 50 determines whether or not the number of steps in which reinforcement learning is executed reaches the maximum number of steps (step S20). The maximum number of steps may be arbitrarily set according to a problem to be handled or the like. In a case where it is determined that the number of steps reaches the maximum number of steps (Yes in step S20), the process proceeds to step S22. In a case where it is not determined that the number of steps reaches the maximum number of steps (No in step S20), the process proceeds to step S18.

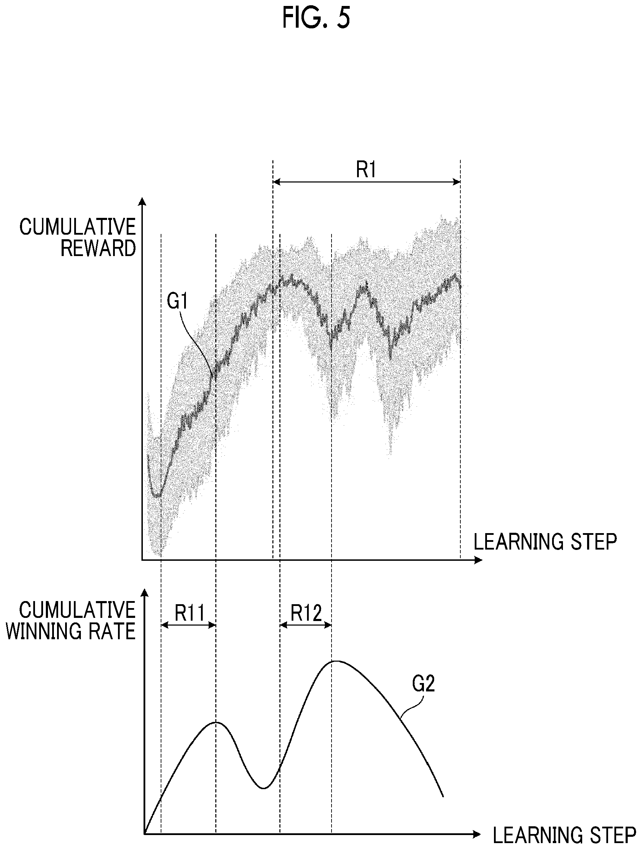

In a case where a determination result in step S20 is Yes, the model extraction unit 54 selects the trained model (step S22). Specifically, the model extraction unit 54 extracts the trained model in which both the value of the cumulative reward and the value of the cumulative winning rate satisfy the predetermined condition. Fig. 5 is a diagram for explaining a method of selecting a trained model according to the embodiment. An upper diagram of Fig. 5 is a graph in which a horizontal axis represents the number of learning steps and a vertical axis represents a cumulative reward. A lower diagram of Fig. 5 is a graph in which a horizontal axis represents the number of learning steps and a vertical axis represents a cumulative winning rate. In Fig. 5, as shown in the graph G1 and the graph G2, a range R11 indicates a range in which a slope of the cumulative winning rate with respect to the number of learning steps is positive and a differential value of the cumulative winning rate is equal to or larger than a predetermined value. As shown in the graph G1 and the graph G2, a range R12 indicates a range in which a slope of the cumulative winning rate with respect to the number of learning steps is positive, in which a differential value of the cumulative winning rate is equal to or larger than a predetermined value, and in which the value of the cumulative reward is equal to or larger than a predetermined value. In this case, the model extraction unit 54 selects the trained model in the range R12 as the trained model to be evaluated. The model extraction unit 54 discards, for example, the trained model in which both the value of the cumulative reward and the value of the cumulative winning rate do not satisfy a predetermined condition. Then, the process proceeds to step S24. Note that the model extraction unit 54 may store the selected trained model in the storage unit 14.

The learning unit 42 evaluates the selected trained model (step S24). Then, the processing of Fig. 4 is ended. In the present embodiment, the model extraction can be performed without confirming the generalization performance during the learning, and thus, it is possible to reduce the evaluation time during the learning. In addition, in the present embodiment, the model that is a candidate is extracted in advance and is stored. Thus, it is possible to reduce an evaluation time after learning.

The learning device, the learning method, and the learning program according to the present embodiment are understood, for example, as follows.

According to a first aspect, there is provided a learning device 10 that performs learning of a learning model of an agent, the learning device including: a reinforcement learning unit 50 that performs learning of the learning model such that a reward assigned to the agent under a predetermined environment is maximized; an evaluation index value calculation unit 52 that calculates a first index value and a second index value of the learning model; and a model extraction unit that extracts, as a trained model, the learning model in which the number of learning steps is equal to or larger than a predetermined number. The model extraction unit 54 selects, as the trained model to be evaluated, the trained model in which each of the first index value and the second index value satisfies a predetermined condition, from the trained models. Thereby, the learning device according to the first aspect can appropriately select a learning model having a good performance from among the learning models during learning. In addition, the learning device according to the first aspect can extract a model without confirming the generalization performance during learning. Therefore, it is possible to reduce an evaluation time during learning. Further, in the learning device according to the first aspect, the model that is a candidate is extracted in advance and is stored. Thus, it is possible to reduce an evaluation time after learning.

In the learning device according to a second aspect, the evaluation index value calculation unit 52 calculates a cumulative winning rate value and a cumulative reward value of the learning model. Thereby, the learning device according to the second aspect can use the cumulative winning rate value and the cumulative reward value of the learning model, as the index value for evaluating the performance of the learning model.

In the learning device according to a third aspect, the model extraction unit 54 selects, as the trained model to be evaluated, the trained model in which the cumulative reward value is equal to or larger than a predetermined value. Thereby, the learning device according to the third aspect can more appropriately select a learning model having a good performance from among the learning models during learning.

In the learning device according to a fourth aspect, the model extraction unit 54 selects, as the trained model to be evaluated, the trained model in a range in which a slope of the cumulative winning rate value with respect to the number of learning steps is positive and a differential value of the cumulative winning rate value is equal to or larger than a predetermined value. Thereby, the learning device according to the fifth aspect can more appropriately select a learning model having a good performance from among the learning models during learning.

According to a fifth aspect, there is provided a learning method of performing learning of a learning model of an agent by using a learning device, the learning method including: a step of performing learning of the learning model such that a reward assigned to the agent under a predetermined environment is maximized; a step of calculating a first index value and a second index value of the learning model; a step of extracting, as a trained model, the learning model in which the number of learning steps is equal to or larger than a predetermined number; and a step of selecting, as the trained model to be evaluated, the trained model in which each of the first index value and the second index value satisfies a predetermined condition, from the trained models.

According to a sixth aspect, there is provided a learning program for performing learning of a learning model of an agent by using a learning device, the learning program causing the learning device to execute: a step of performing learning of the learning model such that a reward assigned to the agent under a predetermined environment is maximized; a step of calculating a first index value and a second index value of the learning model; a step of extracting, as a trained model, the learning model in which the number of learning steps is equal to or larger than a predetermined number; and a step of selecting, as the trained model to be evaluated, the trained model in which each of the first index value and the second index value satisfies a predetermined condition, from the trained models.

Although the embodiment of the present disclosure has been described above, the present disclosure is not limited by the content of the embodiment. In addition, the above-described components include components that can be easily assumed by those skilled in the art, components that are substantially the same, or components that fall within an equivalent range. Further, the above-described components can be combined as appropriate. Furthermore, various omissions, replacements, or modifications of the above-described components can be made without departing from the concept of the above-described embodiment.

### Reference Signs List

10: learning device
12: environment unit
14: storage unit
16: control unit
20: motion model
22: competitive model
24: environment model
26: reward model
30: reinforcement learning model
40: setting unit
42: learning unit
50: reinforcement learning unit
52: evaluation index value calculation unit
54: model extraction unit

## Claims

1. A learning device that performs learning of a learning model of an agent, the learning device comprising:
a reinforcement learning unit that performs learning of the learning model such that a reward assigned to the agent under a predetermined environment is maximized;
an evaluation index value calculation unit that calculates a first index value and a second index value of the learning model; and
a model extraction unit that extracts, as a trained model, the learning model in which the number of learning steps is equal to or larger than a predetermined number,
wherein the model extraction unit selects, as the trained model to be evaluated, the trained model in which each of the first index value and the second index value satisfies a predetermined condition, from the trained models.

2. The learning device according to Claim 1,
wherein the evaluation index value calculation unit calculates a cumulative winning rate value and a cumulative reward value of the learning model.

3. The learning device according to Claim 2,
wherein the model extraction unit selects, as the trained model to be evaluated, the trained model in which the cumulative reward value is equal to or larger than a predetermined value.

4. The learning device according to Claim 2 or 3,
wherein the model extraction unit selects, as the trained model to be evaluated, the trained model in a range in which a slope of the cumulative winning rate value with respect to the number of learning steps is positive and a differential value of the cumulative winning rate value is equal to or larger than a predetermined value.

5. A learning method of performing learning of a learning model of an agent by using a learning device, the learning method comprising:
a step of performing learning of the learning model such that a reward assigned to the agent under a predetermined environment is maximized;
a step of calculating a first index value and a second index value of the learning model;
a step of extracting, as a trained model, the learning model in which the number of learning steps is equal to or larger than a predetermined number; and
a step of selecting, as the trained model to be evaluated, the trained model in which each of the first index value and the second index value satisfies a predetermined condition, from the trained models.

6. A learning program for performing learning of a learning model of an agent by using a learning device, the learning program causing the learning device to execute:
a step of performing learning of the learning model such that a reward assigned to the agent under a predetermined environment is maximized;
a step of calculating a first index value and a second index value of the learning model;
a step of extracting, as a trained model, the learning model in which the number of learning steps is equal to or larger than a predetermined number; and
a step of selecting, as the trained model to be evaluated, the trained model in which each of the first index value and the second index value satisfies a predetermined condition, from the trained models.
